# EUROPÄISCHE PATENTANMELDUNG

(11) **EP 0 716 222 A1**
(43) Veröffentlichungstag der Anmeldung: **12.06.1996**
(21) Anmeldenummer: 95117677.5
(22) Anmeldetag: 09.11.1995
(51) Int. Cl.: F02D 9/06, F01N 1/16

(54) **Abgasklappen-Anordnung**

(30) Priorität: 06.12.1994 DE 9419537 U
(71) Anmelder: Firma J. Eberspächer, D-73730 Esslingen (DE)
(72) Erfinder: Schlenker, Friedrich, D-73207 Plochingen (DE)

(57) **Zusammenfassung**

Die Erfindung betrifft eine Abgasklappen-Anordnung mit verschwenkbarer Abgasklappe in einem Abgasrohr einer Abgas-Schalldämpferanlage. Zwecks Schaffung einer Abgasklappen-Anordnung der eingangs genannten Art, die einfach aufgebaut, einfach zu fertigen und einfach zu zusammensetzen ist, ohne funktionelle Nachteile in Kauf nehmen zu müssen, ist erfindungsgemäß das Abgasrohr durch zwei zusammensetzbare Halbschalen (3) gebildet.

## Beschreibung

Die Erfindung betrifft eine Abgasklappen-Anordnung mit verschwenkbarer Abgasklappe in einem Abgasrohr einer Abgas-Schalldämpferanlage.

Bekannte Abgasklappen-Anordnungen besitzen ein Gußgehäuse in Form eines Rohrs, in welchem die Abgasklappe, ein mechanisch gefertigtes Einzelteil, als Scheibe durch eine Rohröffnung eingesetzt wird. Die Abgasklappe wird innerhalb des Rohres in ihrer Schwenkstellung positioniert und von außen die Drehachse der Klappe eingesetzt, so daß die Abgasklappe in ihrer Schwenkstellung innerhalb des Rohrs befestigt ist. Eine derartige Art der Fertigung ist vergleichsweise aufwendig und erfordert relativ viele Einzelteile.

Aufgabe der Erfindung ist die Schaffung einer Abgasklappen-Anordnung der eingangs genannten Art, die einfach aufgebaut, einfach zu fertigen und einfach zu zusammensetzen ist, ohne funktionelle Nachteile in Kauf nehmen zu müssen.

Gelöst wird die der Erfindung zugrundeliegende Aufgabe durch die im Anspruch 1 angegebenen Merkmale.

Vorteilhaft weitergebildet wird der Erfindungsgegenstand durch die Merkmale der Ansprüche 2 bis 13.

Wesen der Erfindung ist, das bisher nach dem Stand der Technik einteilige Abgasrohr aus zwei zusammensetzbaren Halbschalen auszubilden, wobei die Abgasklappe vorzugsweise als Schmiedeteil ausgebildet ist. Die Halbschalen sind vorzugsweise Blechformteile und weisen in Längsrichtung radial vorstehende Befestigungsflansche auf, die gegeneinander befestigt sind, um das geschlossene Abgasrohr im zusammengesetzten Zustand der Anordnung auszubilden. Die Halbschalen sind vorzugsweise gleich, jedoch spiegelbildlich zueinander ausgebildet.

Die Abgasklappe besitzt zweckmäßigerweise eine einzige fliegende Lagerung.

Es kann aber auch bei stärkerer Beanspruchung ein weiteres Gegenlager vorgesehen sein, welches in einer entsprechenden Aussparung zusammengesetzter Halbschalen aufgenommen ist.

Der Durchströmungsquerschnitt zweier zusammengesetzter Halbschalen weist vorzugsweise Rundform auf, und es besitzt eine plattige Abgasklappe vorzugsweise ein elliptisches Umfangsprofil, wobei die kleine Achse der Ellipse die Schwenkachse der Abgasklappe ist und im wesentlichen dem Innendurchmesser der zusammengesetzten Halbschalen entspricht. Ist die Abgasklappe mit elliptischem Umfangsprofil im Abgasrohr in ihrer geschlossenen Stellung, stößt die Abgasklappe mit ihrer größeren Ellipsenachse am Innenumfang des Abgasrohres an, wobei vorzugsweise auch Einbuchtungen ausgebildet sein können, z.B. eingeprägte Sicken in den Halbschalen, die einen Anschlag für eine Abgasklappe in ihrer geschlossenen Stellung ausbilden.

Vorzugsweise sind Abgasklappe und Lagerbereich der Abgasklappe einstückig ausgebildet, wobei der Lagerbereich eine Lagerachse und vorzugsweise einen runden Lagerflansch besitzt, welcher zwischen Lagerachse und eigentlicher Abgasklappe gelegen ist und in einer Mantelaussparung der beiden Halbschalen paßgenau aufgenommen ist, wenn diese zu einem geschlossenen Abgasrohr zusammengesetzt sind.

Die Mantelaussparung weist in Radialrichtung des Abgasrohres einen Verlängerungsstutzen auf, welcher in Draufsicht bezüglich der Längsachse des Abgasrohres spiegelbildlich, jedoch asymmetrisch bzw. unrund ausgeführt ist. In den asymmetrischen Ausbuchtungen sitzen in diametral entgegengesetzter Anordnung Sicherungsnasen von Lagerschalenhälften einer zweiteiligen Lagerschale, die die Lagerachse der Abgasklappe aufnimmt. Die Sicherungsnasen sichern die Lagerschalenhälften gegen ein Verdrehen bei Betätigung einer Abgasklappe. Die Sicherungsnasen sorgen ferner auch für eine Axialfixierung der Schwenkachse einer fliegend gelagerten Abgasklappe, welche hängend angeordnet ist. Ist zusätzlich ein Gegenlager vorgesehen, so besorgen die Sicherungsnasen zusammen mit dem Gegenlager eine Axialfixierung der Schwenkachse. Die Sicherungsnasen, welches Vorsprünge sind, können auch umgekehrt Einbuchtungen sein, wenn die Stutzenwand entsprechend angepaßt ist.

Sicherungsnasen und Lagerhalbschalen sind vorzugsweise einstückig ausgebildet und bestehen zweckmäßigerweise aus Keramik.

Durch die Erfindung ergeben sich mithin wenige Bauteile einer Abgasklappen-Anordnung, die aufgrund der geteilten Bauweise des Abgasrohres in Form von zusammensetzbaren Halbschalen besonders einfach zu montieren ist. Das Schmiedeteil einer Abgasklappe einschließlich angesetzter Lagerachse ist einfacher zu fertigen als die bekannten mechanisch hergestellten Einzelteile, die zudem noch zusammengesetzt werden müssen.

Die Erfindung wird nachfolgend anhand von Ausführungsbeispielen unter Bezugnahme auf die beigefügte Zeichnung näher erläutert; es zeigen:
- Fig. 1: eine Abgasklappen-Anordnung mit fliegend gelagerter, hängender Abgasklappe in einem Abgasrohr bestehend aus zwei zusammengesetzten Halbschalen,
- Fig. 2: die Abgasklappen-Anordnung nach Fig. 1 in einem Längsschnitt,
- Fig. 3: die Abgasklappen-Anordnung nach Fig. 1 in einer Draufsicht,
- Fig. 4: die Abgasklappen-Anordnung nach Fig. 2 in einer Draufsicht mit Andeutung der angeschlossenen oberseitigen Steuereinheit,
- Fig. 5: eine andere Abgasklappen-Anordnung ähnlich Fig. 2 mit elliptischer Abgasklappe,
- Fig. 6: eine Ansicht ähnlich Fig. 4 mit zusätzlichen Abgasklappen-Anschlägen, und
- Fig. 7, 8 und 9: eine andere Abgasklappen-Anordnung mit zweitem Gegenlager ähnlich den Ansichten der Fig. 1, Fig. 2 und Fig. 4 der ersten Ausführungsvariante.

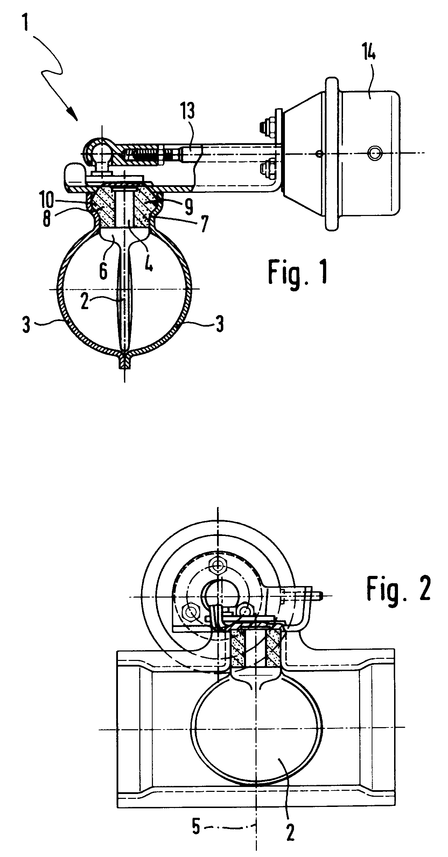

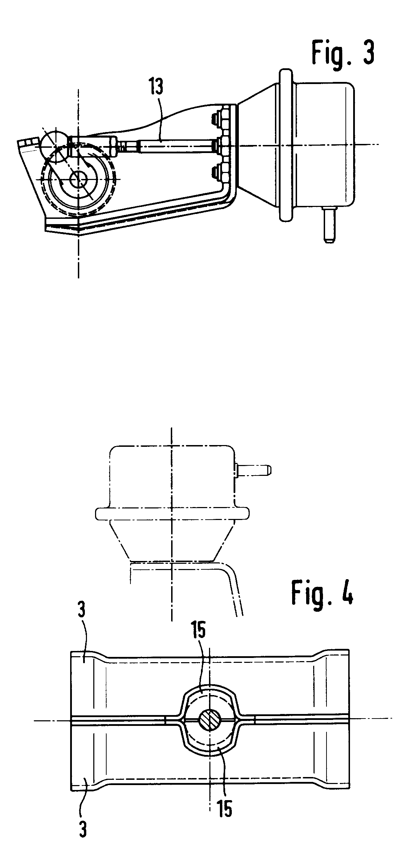

Gemäß den Fig. 1 bis 4 umfaßt eine Abgasklappen-Abordnung 1 eine verschwenkbare Abgasklappe 2, welche in zwei zusammengesetzten Halbschalen 3 hängend und fliegend mit Hilfe eines einzigen oberseitigen Lagers in einer Mantelaussparung 7 der Halbschalen 3 gelagert ist. Das obere Ende der Lagerachse 4 ist exzentrisch mit einem Stellarm 13 einer Unterdruckdose 14 verbunden, die an einen Verbrennungsmotor eines nicht weiter interessierenden Kraftfahrzeuges angeschlossen ist.

Die Unterdruckdose kann durch eine andere Steuereinheit, z.B. durch einen Elektromagnet ersetzt sein, welcher Stellimpulse "auf/zu" für eine Abgasklappe 2 empfängt. Die Abgasklappen-Anordnung ist Bestandteil einer Abgas-Schalldämpferanlage vorzugsweise in Doppelrohrausführung, bei der nur ein Endrohr der Abgas-Schalldämpferanlage die verschwenkbare Abgasklappe enthält. Die Abgasklappe befindet sich bei Volllast des Motors in ihrer vollständig geöffneten Stellung in Axialrichtung des einen Endrohrs und ist bei Teillast geschlossen, um in der Schalldämpferanlage eine entsprechende optimale Dämpfungscharakteristik im Teillastbetrieb des Motors einzustellen.

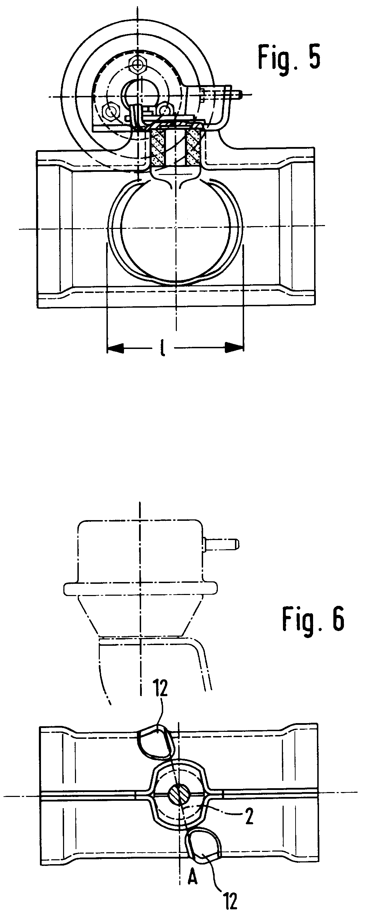

Gemäß den Fig. 1 bis 4 ist die Abgasklappe 2 zusammen mit dem oberen angrenzenden runden Lagerflansch 6 und oberer vertikaler Lagerachse 4 einstückig als Schmiedeteil ausgebildet. Die Lagerachse 4 ist in zwei keramischen Lagerhalbschalen 8, 9 gelagert, welche im zusammengesetzten Zustand der Anordnung eine Lagefixierung der Abgasklappe 2 besorgen, und zwar durch diametral entgegengesetzte vorstehende Sicherungsnasen 10. Die Sicherungsnasen 10 sind in entsprechenden Ausbuchtungen 15 der Mantelaussparung 7 aufgenommen, wie dies insbesondere der Fig. 4 zu entnehmen ist. Ersichtlich sind mithin die Lagerhalbschalen 8, 9 gegen ein Verdrehen bei Betätigung der Abgasklappe 2 gesichert.

Obgleich in Fig. 2 die Abgasklappe 2 als Rundscheibe ausgebildet ist, wird vorzugsweise eine Abgasklappe 2 mit elliptischem Querschnitt verwendet, wie dies insbesondere der Fig. 5 zu entnehmen ist. Die elliptische Querschnittsform ist so getroffen, daß die kurze Ellipsenachse gleichzeitig die Schwenkachse 5 ist. Die lange Ellipsenachse l ist größer als der Innendurchmesser des Abgasrohres, so daß die Abgasklappe 2 in der geschlossenen Stellung an der inneren Rohrwand anstößt und einen Anschlag bildet.

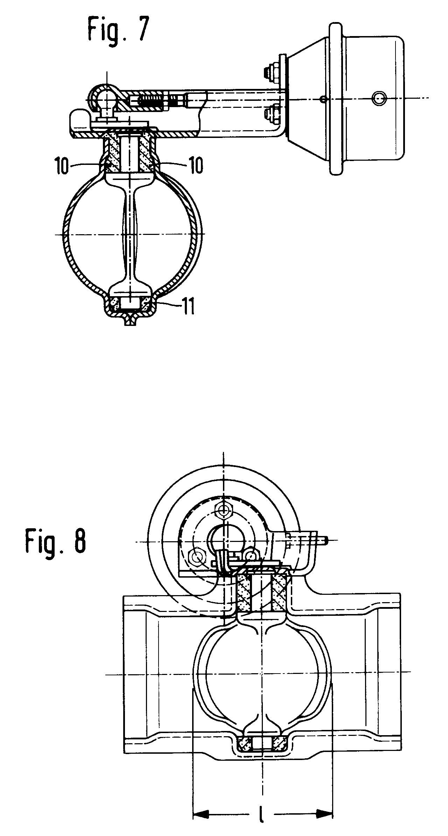

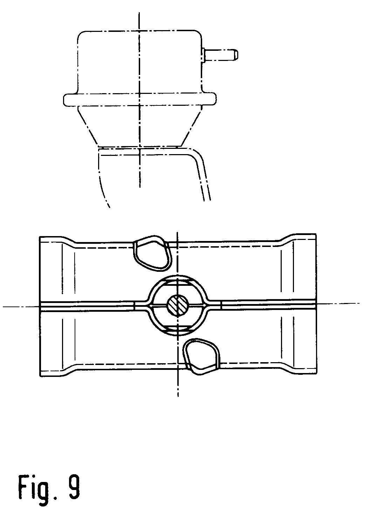

Das in den Fig. 7 bis 9 veranschaulichte Ausführungsbeispiel entspricht im wesentlichen demjenigen der Fig. 1 bis 4, weist jedoch bei der Abgasklappe 2 ein weiteres unteres Gegenlager 11 auf, das bei starker Beanspruchung einer Abgasklappen-Anordnung 1 von Vorteil ist. Die elliptische Abgasklappe 2 gemäß Fig. 8 greift in ihrer geschlossenen Stellung gemäß Fig.9 in Einbuchtungen 12 in Form von eingeprägten Sicken ein, welche in den Halbschalen 3 an entsprechender Stelle ausgebildet sind. Die Einbuchtungen 12 bzw. Sicken dienen mithin als Endanschläge einer Abgasklappe 2 in der geschlossenen Stellung, wie dies auch der Fig. 6 zu entnehmen ist.

Ersichtlich wird durch die Erfindung eine Anordnung bestehend aus wenigen Bauteilen geschaffen, welche einfach zu montieren sind.

Es sei noch angemerkt, daß in den Unteransprüchen enthaltene selbständig schutzfähige Merkmale trotz der vorgenommenen formalen Rückbeziehung auf den Hauptanspruch entsprechenden eigenständigen Schutz haben sollen. Im übrigen fallen sämtliche in den gesamten Anmeldungsunterlagen enthaltenen erfinderischen Merkmale in den Schutzumfang der Erfindung.

## Patentansprüche

1. Abgasklappen-Anordnung (1) mit verschwenkbarer Abgasklappe (2) in einem Abgasrohr einer Abgas-Schalldämpferanlage,
dadurch gekennzeichnet,
daß das Abgasrohr zwei zusammensetzbare Halbschalen (3) sind.

2. Abgasklappen-Anordnung nach Anspruch 1,
dadurch gekennzeichnet,
daß die Angasklappe (2) als Schmiedeteil ausgebildet ist.

3. Abgasklappen-Anordnung nach Anspruch 1 oder 2,
dadurch gekennzeichnet,
daß die Abgasklappe (2) eine fliegende Lagerung aufweist (Fig. 1).

4. Abgasklappen-Anordnung nach einem der Ansprüche 1-3,
dadurch gekennzeichnet,
daß die beiden Halbschalen (3) im zusammengesetzten Zustand einen runden Durchströmungsquerschnitt ausbilden.

5. Abgasklappen-Anordnung nach einem der Ansprüche 1-4,
dadurch gekennzeichnet,
daß die plattige Abgasklappe (2) ein elliptisches Umfangsprofil aufweist, wobei die kleine Achse der Ellipse die Schwenkachse (5) der Abgasklappe (2) ist und im wesentlichen den Innendurchmesser der zusammengesetzten Halbschalen (3) entspricht (Fig. 5).

6. Abgasklappen-Anordnung nach einem der Ansprüche 1-5,
dadurch gekennzeichnet,
daß Abgasklappe (2) und Lagerbereich der Abgasklappe einstückig ausgebildet sind.

7. Abgasklappen-Anordnung nach Anspruch 6,
dadurch gekennzeichnet,
daß der Lagerbereich eine Lagerachse (4) und einen runden Lagerflansch (6) besitzt, welcher der Abgasklappe (2) benachbart ist und in einer Mantelaussparung (7) der beiden Halbschalen (3) paßgenau aufgenommen ist.

8. Abgasklappen-Anordnung nach Anspruch 7,
dadurch gekennzeichnet,
daß die Lagerachse (4) in einer zweiteiligen Lagerschale (8, 9) sitzt, welche am Außendurchmesser zwei diametral entgegengesetzte Sicherungsnasen (10) besitzt, die formschlüssig in der Mantelaussparung (7) aufgenommen sind und im zusammengesetzten Zustand der Anordnung gegen ein Verdrehen sowie in Axialrichtung der Schwenkachse (5) der Abgasklappe (2) gesichert sind (Fig. 1 und 7).

9. Abgasklappen-Anordnung nach Anspruch 8,
dadurch gekennzeichnet,
daß die Sicherungsnase (10) und die Lagerhalbschale (8 bzw. 9) einstückig ausgebildet sind.

10. Abgasklappen-Anordnung nach Anspruch 8 oder 9,
dadurch gekennzeichnet,
daß die Lagerhalbschalen (8, 9) aus Keramik gebildet sind.

11. Abgasklappen-Anordnung nach Anspruch 1, 2 und 4 bis 10,
dadurch gekennzeichnet, daß die Abgasklappe (2) ein zweites Gegenlager (11) aufweist (Fig. 7-9).

12. Abgasklappen-Anordnung nach einem der Ansprüche 1-10,
dadurch gekennzeichnet,
daß die Halbschalen (3) Einbuchtungen (12) aufweisen, welche in der geschlossenen Stellung (A) der Abgasklappe (2) ein Klappenanschlag sind (Fig. 6).

13. Abgasklappen-Anordnung nach Anspruch 12,
dadurch gekennzeichnet,
daß die Einbuchtungen (12) eingeprägte Sicken sind.
